# EUROPEAN PATENT APPLICATION

(11) **EP 4 802 872 A1**
(43) Date of publication of application: **09.09.2026**
(21) Application number: 26155451.3
(22) Date of filing: 30.01.2026
(51) Int. Cl.: A01C 7/04

(54) **SEED METER ASSEMBLY**

(30) Priority: 02.03.2025 US 202563765625 P; 06.03.2025 US 202563767870 P; 11.03.2025 US 202519076019
(71) Applicant: Deere & Company, Moline, IL 61265 (US)
(72) Inventor: Garner, Elijah B., 68163 Mannheim (DE); Jarry, Gael, 68163 Mannheim (DE)
(74) Representative: Reichert, Christian

(57) **Abstract**

The seed meter assembly (344) comprising: a seed meter housing (352) at least partially defining a cavity (346); a seed metering member (54) within the seed meter housing (352) and at least partially defining the cavity (346), the seed metering member (54) having first side (54B) and a second side (54C) and a plurality of apertures (78) extending between the first side (54B) of the seed metering member (54) and the second side (54C) of the seed metering member (54) and arranged in an annular array, wherein the seed metering member (54) is configured to adhere at least one seed to at least one aperture of the plurality of apertures (78) using a pressure differential, to rotate about a seed metering member axis (68), and to move the at least one seed adhered to the at least one aperture of the plurality of apertures (78) along a seed path (382) from a seed pick-up location (380) to a seed hand-off location (384); and a seed curtain assembly (400) comprising: a substantially linear seed curtain (480, 490) held between an inner surface of the seed meter housing (352) and the first side (54B) of the seed metering member (54) and at least partially intersecting the seed path (382), the seed curtain (480, 490) comprising a plurality of projections extending toward the seed metering member (54) from a seed curtain (480, 490) base coupled to the inner surface of the seed meter housing (352).

## Description

### BACKGROUND

The disclosure relates to agricultural seed metering, and more particularly to seed curtains for use within the housings of seed metering systems.

### SUMMARY

In some embodiments, a seed meter assembly comprises: a seed meter housing at least partially defining a cavity; a seed metering member within the seed meter housing and at least partially defining the cavity, the seed metering member having first side and a second side and a plurality of apertures extending between the first side of the seed metering member and the second side of the seed metering member and arranged in an annular array; a seed curtain assembly comprising: a substantially linear seed curtain held between an inner surface of the seed meter housing and the first side of the seed metering member and at least partially intersecting the seed path. The seed metering member may be configured to adhere at least one seed to at least one aperture of the plurality of apertures using a pressure differential, to rotate about a seed metering member axis, and to move the at least one seed adhered to the at least one aperture of the plurality of apertures along a seed path from a seed pick-up location to a seed hand-off location. The seed curtain may comprise a plurality of projections extending toward the seed metering member from a seed curtain base coupled to the inner surface of the seed meter housing. In some embodiments, the substantially linear seed curtain comprises a first end and a second end, the first end radially inward of the second end with respect to the seed metering member axis. In some embodiments, the plurality of projections comprises a first group of projections, each projection of the first group of projections having a first cross-sectional dimension, and a second group of projections, each projection of the second group of projections having a second cross-sectional dimension different from the first cross-sectional dimension. In some embodiments, the first cross-sectional dimension is larger than the second cross-sectional dimension and the first group of projections is configured to facilitate passage therethrough of at least one agitator coupled to the first side of the seed metering member and to discourage passage therethrough of seed. In some embodiments, the second group of projections at least partially intersects the seed path and is configured to allow passage therethrough of seed adhered to the at least one aperture of the plurality of apertures and moving along the seed path, discourage passage therethrough of a seed double adhered to the at least one aperture of the plurality of apertures and moving along the seed path, and discourage passage therethrough of seed in a direction opposite the seed path. In some embodiments, the at least one projection of the plurality of projections has a triangular cross-sectional shape. In some embodiments, a flat edge of the triangular cross-sectional shape is substantially perpendicular to the seed path. In some embodiments, the at least one projection of the plurality of projections has a cross-sectional shape having a major axis and a minor axis. In some embodiments, the minor axis of the cross-sectional shape is substantially perpendicular to the seed path.

In some embodiments, a seed curtain assembly for a seed meter comprises a first seed curtain having a first seed curtain first end and a first seed curtain second end defining a first seed curtain axis therebetween; a first seed curtain base; and a plurality of first seed curtain projections extending from the first seed curtain base, a second seed curtain having: a second seed curtain first end and a second seed curtain second end defining a second seed curtain axis therebetween; a second seed curtain base; and a plurality of second seed curtain projections extending from the second seed curtain base. Each first seed curtain projection of the plurality of first seed curtain projections may have a first seed curtain shape and first seed curtain cross-sectional dimension. The first seed curtain cross-sectional dimension may decrease across the first seed curtain from the first seed curtain first end to the first seed curtain second end. The first seed curtain may be configured to be held between an inner surface of a seed meter housing and a seed metering member rotatable about a metering member axis. The first seed curtain may be further configured to allow passage therethrough of seed adhered to the seed metering member, discourage passage therethrough of seed not adhered to the seed metering member in a direction of the seed path, and moving along a seed path and discourage passage therethrough of seed in a direction opposite the seed path. Each second seed curtain projection of the plurality of second seed curtain projections may have a second seed curtain shape and a second seed curtain cross-sectional dimension. The second seed curtain may be configured to be held between the inner surface of the seed meter housing and the seed metering member rotatable about the metering member axis. The second seed curtain may be further configured to allow passage therethrough of at least one seed agitator on the seed metering member.

In some embodiments, the plurality of first seed curtain projections comprises: a first group of projections on the first seed curtain first end of the first seed curtain, the first seed curtain cross-sectional dimension of each projection of the first group of projections being substantially the same, and a second group of projection on the first seed curtain second end of the first seed curtain, the first seed curtain cross-sectional dimension of each projection of the second group of projections being substantially the same. In some embodiments, the first group of projections of the plurality of first seed curtain projections is configured to facilitate passage therethrough of at least one agitator coupled to the seed metering member and to discourage passage therethrough of seed. In some embodiments, at least one projection of the plurality of first seed curtain projections has a triangular cross-sectional shape and the seed curtain assembly is configured to be held between an inner surface of a seed meter housing and a seed metering member rotatable about a metering member axis so that a flat edge of the triangular cross-sectional shape is substantially perpendicular to the seed path.

In some embodiments, a seed curtain assembly for a seed meter, comprises a seed curtain base having a seed curtain first end and a seed curtain second end defining a seed curtain axis therebetween, a plurality of projections extending from the seed curtain base. The seed curtain base may be configured to be coupled to an inner surface of a seed meter housing. Each projection of the plurality of projections may have a cross-sectional shape and a cross-sectional dimension. The cross-sectional dimension of a first projection of the plurality of projections at the seed curtain first end may be larger than a cross-sectional dimension of a second projection of the plurality of projections at the seed curtain second end. The plurality of projections may be configured to allow passage across the seed curtain assembly in a first direction of seed adhered to a seed metering member and discourage passage across the seed curtain assembly of seed in a second direction.

In some embodiments, the first projection of the plurality of projections is spaced a first inward distance from a distalmost portion of the seed curtain first end of the seed curtain base. In some embodiments, the second projection of the plurality of projections is spaced a second inward distance from a distalmost portion of the seed curtain second end of the seed curtain base. In some embodiments, the first projection is part of a first set of projections of the plurality of projections, wherein the cross-sectional dimension of each projection of the first set of projections is substantially the same. In some embodiments, the second projection is part of a second set of projections of the plurality of projections, wherein the cross-sectional dimension of each projection of the second set of projections is substantially the same. In some embodiments, the seed curtain base is configured to be coupled to an inner surface of the seed meter housing such that the seed curtain axis is substantially perpendicular to a seed path along which seeds are moved by the seed metering member from a seed pick-up location to a seed hand-off location. In some embodiments, the seed curtain base is configured to be coupled to an inner surface of the seed meter housing at an angle to a vertical line containing an axis of rotation of the seed metering member, the angle being less than about -70 degrees.

In some embodiments, a seed valve assembly for a seed meter comprises a first valve coupled to a first hinge at a first end of the first valve and having a first valve abutment surface at a second end of the first valve and configured to sealingly mate with a first valve closing surface, and a second valve coupled to a second hinge at a first end of the second valve and having a second valve abutment surface at a second end of the second valve configured to sealingly mate with a second valve closing surface. The first valve may have a first valve first position corresponding to a first position of the seed meter and a first valve second position corresponding to a second position of the seed meter. The second valve may have a second valve first position corresponding to a first position of the seed meter and a second valve second position corresponding to a second position of the seed meter. When in the first valve first position corresponding to a first position of the seed meter, the first valve abutment surface at the second end of the first valve may be spaced a distance from the first valve closing surface and configured to allow a commodity to pass through the first valve. When in the second valve first position corresponding to a first position of the seed meter, the second valve abutment surface at the second end of the second valve may be spaced a distance from the second valve closing surface and configured to allow the commodity to pass through the second valve. When in the first valve second position corresponding to a second position of the seed meter, the first valve abutment surface at the second end of the first valve may be sealingly engaged with the first valve closing surface and configured to block the commodity from passing through the first valve. When in the second valve second position corresponding to a second position of the seed meter, the second valve abutment surface at the second end of the second valve may be sealingly engaged with the second valve closing surface and configured to block the commodity from passing through the second valve.

In some embodiments, at least one of the first hinge and the second hinge comprises a living hinge. In some embodiments, at least one of the first hinge and the second hinge comprises a blocking surface configured to limit how far the at least one of the first hinge and the second hinge can move toward at least one of the first position of the first hinge and the first position of the second hinge. In some embodiments, at least one of the first valve and the second valve are configured to be held open by gravity when in the first position of the first valve and the first position of the second valve. In some embodiments, the first hinge and first valve are located on a first side of a vertical line passing through a rotational axis of a metering member of the seed meter when the seed meter is in the first position, and wherein the second hinge and the second valve are located on a second side of the vertical line passing through the rotational axis of the metering member of the seed meter when the seed meter is in the first position. In some embodiments, at least one of the first hinge and the second hinge comprises a biasing element configured to provide a biasing force on the at least one of the first hinge and the second hinge. In some embodiments, the biasing element comprises at least one of an auxiliary spring and a material of the hinge.

In some embodiments, a seed valve assembly for a seed meter, comprises a hinge having a hinging axis positioned substantially perpendicular to a seed metering member of the seed meter and a valve having a first end coupled to the hinge and a second end configured to sealingly mate with an abutment surface. The valve may have a first lateral side configured to slide along an inner surface and a second lateral side configured to slide along the seed metering member. The valve may have a first position corresponding to a first position of the seed meter and a second position corresponding to a second position of the seed meter, the first position may be configured to allow commodity to pass through the valve and the second position may be configured to block commodity from passing through the valve.

In some embodiments, the first lateral side is spaced a first distance from the inner surface and the second lateral side is spaced a second distance from the seed metering member, the first distance being configured to prevent the passage of a metered commodity between the valve and the inner surface and the second distance being configured to prevent the passage of the metered commodity between the valve and the seed metering member. In some embodiments, the seed metering member comprises at least one of a seed disc and a hub configured to hold the seed disc. In some embodiments, the hinge comprises a living hinge. In some embodiments, the hinge comprises a butt hinge. In some embodiments, the hinge further comprises a spring configured to bias the valve in a direction. In some embodiments, the spring is configured to bias the valve toward the second position of the valve. In some embodiments, the hinge comprises a first hinge abutment surface and a second hinge abutment surface, the first hinge abutment surface and the second hinge abutment surface being configured to limit the first position of the valve. In some embodiments, the second end of the valve moves radially outward as the valve moves from the second position to the first position. In some embodiments, the seed valve assembly for a seed meter further comprises a second hinge having a second hinging axis positioned substantially perpendicular to the seed metering member of the seed meter. The second valve may have a first end coupled to the second hinge and a second end configured to sealingly mate with a second abutment surface, the second valve having a first lateral side configured to slide along a second inner surface and a second lateral side configured to slide along the seed metering member. The second valve may have a first position corresponding to the first position of the seed meter and a second position corresponding to the second position of the seed meter, the first position configured to allow commodity to pass through the second valve and the second position configured to block commodity from passing through the second valve.

In some embodiments, a seed valve assembly for a seed meter, comprises a valve positioned proximate a metering member and coupled to a hinge. The valve may be disposed between a first cavity and a second cavity and may be configured to move about the hinge between a first position corresponding to a first position of the seed meter and in which a metered commodity is permitted to move across the valve between the first cavity and the second cavity and a second position corresponding to a second position of the seed meter and in which the metered commodity is blocked from moving across the valve between the first cavity and the second cavity.

In some embodiments, the seed valve assembly for a seed meter further comprises a second valve positioned proximate the metering member and coupled to a second hinge, wherein the second valve is disposed between the first cavity and the second cavity and configured to move about the second hinge between a first position corresponding to the first position of the seed meter and in which the metered commodity is permitted to move across the second valve between the first cavity and the second cavity and a second position corresponding to the second position of the seed meter and in which the metered commodity is blocked from moving across the second valve between the first cavity and the second cavity. In some embodiments, the metering member comprises a member rotatable about a meter axis and wherein the first valve is positioned on a first vertical side of the meter axis and the second valve is positioned on a second vertical side of the meter axis, opposite the first vertical side of the meter axis.

### BRIEF DESCRIPTION OF THE DRAWINGS

FIG. 1 is a perspective view of a vehicle having a plurality of seed meters.
FIG. 2 is a perspective view of one of the seed meters shown in FIG. 1.
FIG. 3 is another perspective view of one of the seed meters shown in FIG. 1.
FIG. 4 is a perspective view of a cutaway of the seed meter, showing a metering member mounted on a hub.
FIG. 5A is an exploded view of the metering member and the hub according to one embodiment.
FIG. 5B is an exploded view of the metering member and the hub according to another embodiment.
FIG. 6 is a perspective view of select components of another embodiment of a seed meter, showing a first seed curtain, a first seed valve, a second seed curtain, and a second seed valve.
FIGS. 7A-7D are various perspective views of a seed valve/curtain assembly.
FIG. 8 is a top view of a first seed curtain of the seed valve/curtain assembly of FIGS. 7A-7D.
FIGS. 9A-9B are cross-sectional views of various seed curtain projections.
FIGS. 10A-10C are cross-sectional views of various shaped seed curtain projections.
FIG. 11 is a perspective view of the seed valve/curtain assembly of FIGS. 7A-7D coupled to an attached plate.

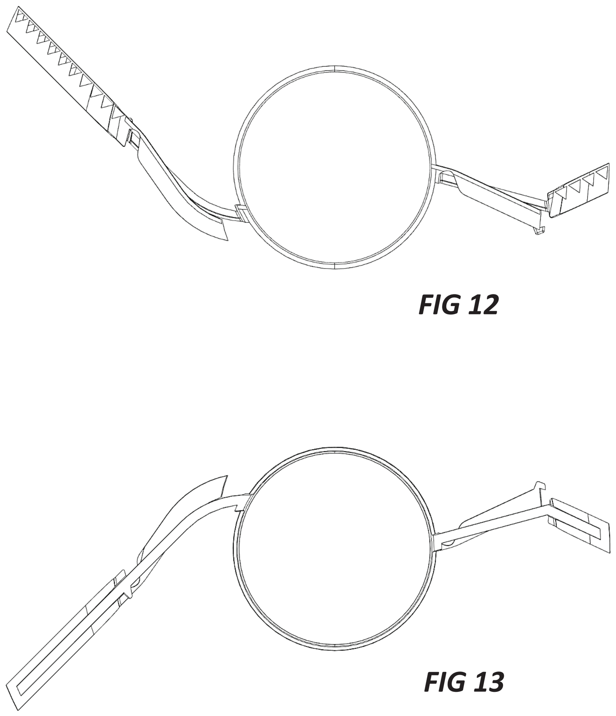

FIG. 12 is a front plan view of a seed valve/curtain assembly.
FIG. 13 is a rear plan view of a seed valve/curtain assembly.

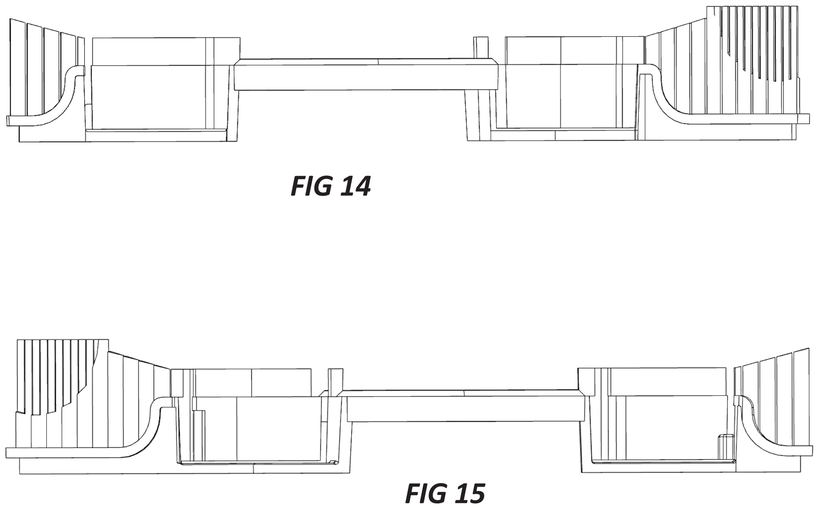

FIG. 14 is a top plan view of a seed valve/curtain assembly.
FIG. 15 is a bottom plan view of a seed valve/curtain assembly.

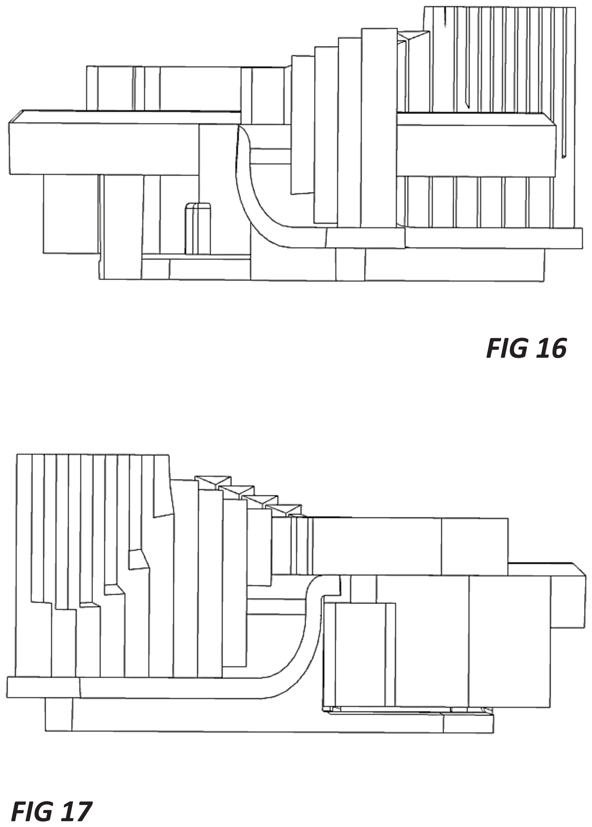

FIG. 16 is a right plan view of a seed valve/curtain assembly.
FIG. 17 is a left plan view of a seed valve/curtain assembly.

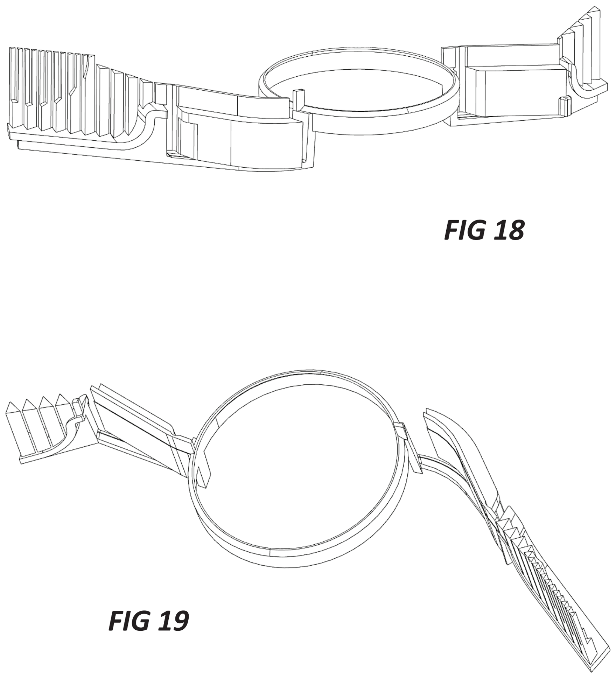

FIG. 18 is a front-bottom perspective view of a seed valve/curtain assembly.
FIG. 19 is a front-top perspective view of a seed valve/curtain assembly.

### DETAILED DESCRIPTION

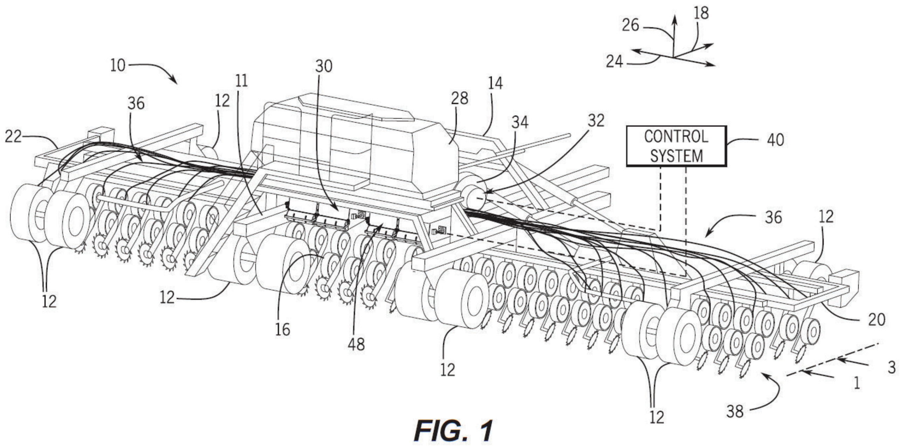

FIG. 1 illustrates a work vehicle 10 according to example embodiments of the present disclosure. The work vehicle 10 may be towed by another vehicle, such as a tractor. Thus, the work vehicle 10 may be a towed work vehicle. In other embodiments, the work vehicle 10 of the present disclosure may be a self-propelled vehicle. In some embodiments, the work vehicle 10 may be an air cart or air seeder. It will be appreciated that the illustrated work vehicle 10 is an example embodiment. One or more features of the present disclosure may be included on a different work vehicle, such as a planter, a commodity cart, or other work vehicle without departing from the scope of the present disclosure.

The work vehicle 10 includes a front end 14 and a rear end 16, and a fore-aft axis 18 extends generally between the front and rear ends 14, 16. The work vehicle 10 also includes a first side 20 and a second side 22, and a lateral axis 24 extends generally between the first and second sides 20, 22. A vertical axis 26 extends perpendicular to both the fore-aft axis 18 and the lateral axis 24.

Generally, the work vehicle 10 may include a chassis 11 and a plurality of wheels 12. The chassis 11 may be a rigid frame that supports the components described in detail below. The wheels 12 may support the chassis 11 and enable movement of the vehicle 10 across the field.

The work vehicle 10 may also include one or more commodity containers 28. The container 28 may be supported on the chassis 11 and disposed proximate the rear end 16. Also, in some embodiments, the container 28 may be disposed centrally between the first side 20 and the second side 22. The commodity container 28 may contain seed, fertilizer, and/or another particulate or granular commodity.

Additionally, the work vehicle 10 may include a metering system 30. The metering system 30 may be a volumetric metering system. The metering system 30 may be disposed generally underneath the commodity container 28 in some embodiments. As such, particles of the commodity within the container 28 may fall due to gravity toward the metering system 30. The metering system 30 may operate to meter out the commodity from the container 28 at a controlled rate as the vehicle 10 moves across the field.

The work vehicle 10 may also include an airflow system 32. The airflow system 32 may include a fan 34 that generates a flow of air. The airflow system 32 may also include a plurality of airflow structures (e.g., plenums, tubes, lines, etc.) that receive the air blowing from the fan 34. Particles of the commodity (metered out by the metering system 30) may fall into the air stream and may flow to a distribution system 36. The distribution system 36 may include a plurality of hoses, lines, or other conduits that extend to different areas of the vehicle 10 along the lateral axis 24. The particles of the commodity may be propelled by the airstream through the distribution system 36, to a plurality of individual row units 45 and to the soil. Each row unit 45 of the vehicle 10 may include a seed meter 44 for singulating the commodity (e.g., seeds) and a ground system 38 with openers, tillers or other similar implements that prepare the soil for delivery of the seed, fertilizer, or other commodity delivered by the distribution system 36.

Moreover, the work vehicle 10 may include a control system 40. The control system 40 may be in communication with and may be configured for controlling the metering system 30, the airflow system 32, and/or other components of the work vehicle 10. The control system 40 may be wholly supported on the work vehicle 10, or the control system 40 may include components that are remote from the vehicle 10. The control system 40 may be in electronic, hydraulic, pneumatic, mechanical, or other communication with the metering system 30, the airflow system 32, etc. In some embodiments, the control system 40 may be in communication with actuators, sensors, and/or other components of the work vehicle 10.

During operation of the work vehicle 10 (e.g., when towed by a tractor or other towing vehicle across a field), the commodity may fall from the container 28 toward the metering system 30. The control system 40 may control the metering system 30 (e.g., by controlled actuation of a drive unit), which allows a controlled quantity of particles to pass into the airflow system 32 at a predetermined rate. The control system 40 may also control the fan 34 for generating a continuous airstream that blows through the airflow system 32, receives the particles metered out from the metering system 30, and flows through the distribution system 36 across the work vehicle 10 to the soil.

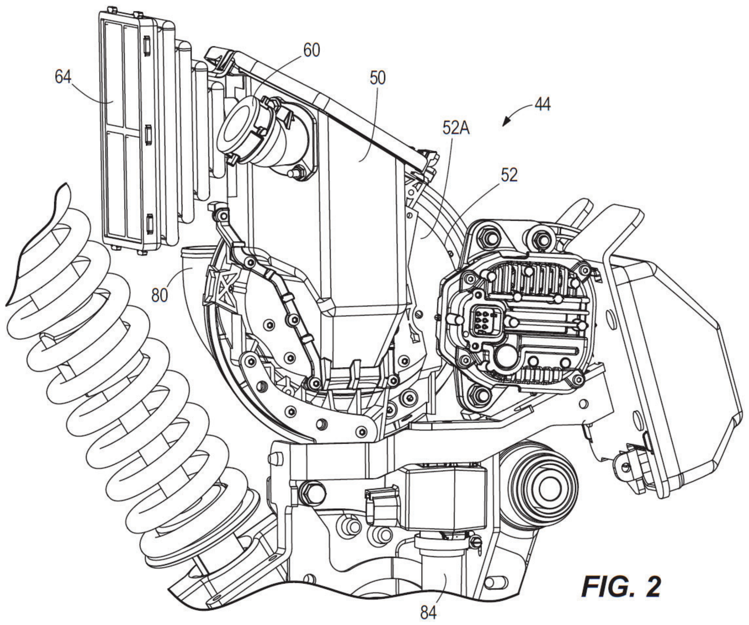

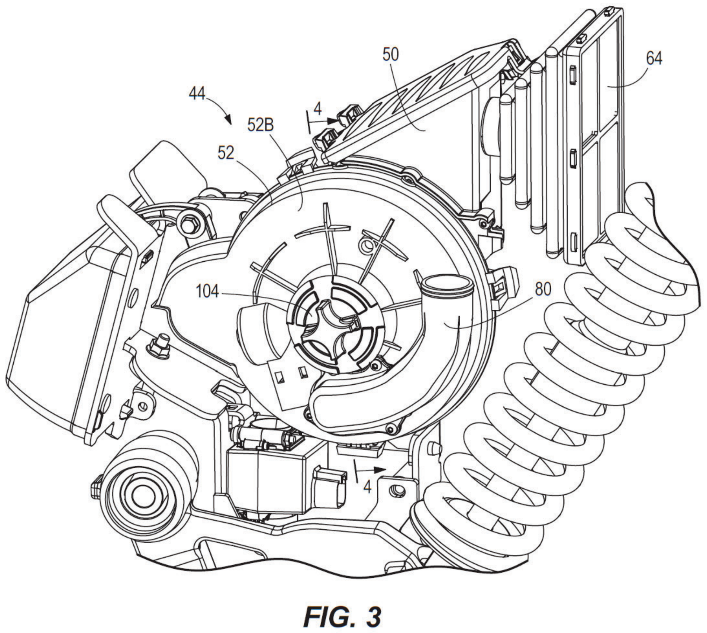

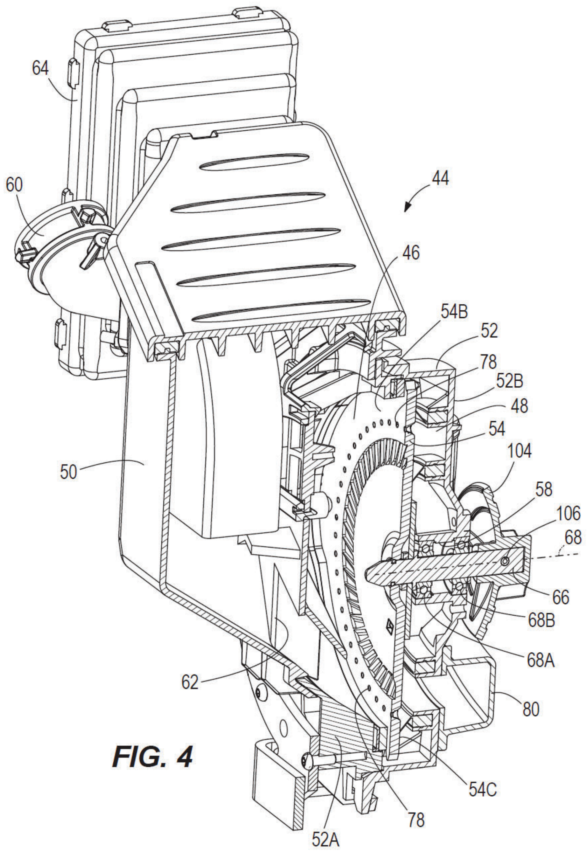

As shown in FIGS. 2-4, the seed meter 44 includes a mini hopper 50, a seed disk housing 52 supporting a metering member such as a seed meter disk (or simply seed disk 54, shown at least in FIG. 4) and a singulator 56, and a motor 72 for driving the seed disk 54. The mini-hopper 50 is a receptacle that accepts seeds or other agricultural product from the storage tank 28 (and the volumetric meter 30) via a seed inlet 60. As shown, the seed inlet 60 is located adjacent to the top of the mini-hopper 50 such that seeds entering the mini-hopper 50 are directed by gravity to a seed outlet or seed disk housing inlet 62 (FIG. 4). The mini-hopper 50 further includes an air inlet 64 positioned adjacent to the seed inlet 60 and operable to provide an airflow through the mini-hopper 50 and into the seed disk housing 52.

The seed disk housing 52 is formed in two halves, a front or seed side of the seed disk housing 52A and a rear or vacuum side of the seed disk housing 52B. The seed disk 54 is housed therebetween. A hub 66 is rotatably mounted within bearings 68A, 68B positioned within a cavity or aperture 58 in the rear side of the seed disk housing 62B and defines an axis of rotation 68. The seed disk 54 is mounted to the hub 66 and rotates therewith about the axis of rotation 68.

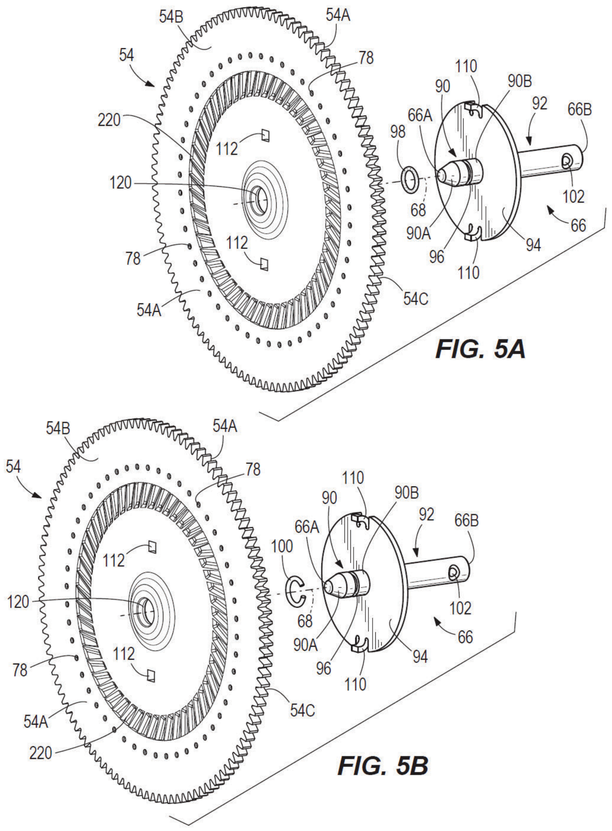

The seed disk 54 is a gear (e.g., a spur gear) defined by a wheel having radially extending teeth 54A, a seed-side face 54B, and a vacuum-side face 54C. A first cavity 46 is defined within the seed disk housing 52 between the seed side of the seed disk housing 52A and the seed disk 54. A second cavity 48 is defined within the seed disk housing 52 between the vacuum side of the seed disk housing 52B and the seed disk 54. Both of the faces 54B, 54C are generally planar, though they can deviate from planar to define apertures (such as apertures 78, 112, 120 and agitator pockets 220 as described below) and to accommodate mounting to the hub 66, as shown in FIGS. 5A-6. The teeth 54A mesh with teeth 70A of a motor output gear 70 (either directly or indirectly via an intermediate gear) such that actuation of the motor 72 rotates the motor output gear 70, thereby rotating the seed disk 54 about the axis of rotation 68. The motor 72 and the output gear 70 represent one embodiment of a seed meter drive unit that is selectively energized to drive rotation of the seed disk 54. Rotation of the seed disk 54 can be carried out in a single, predefined rotational direction R by the drive unit. The seed disk 54 further includes a plurality of seed openings 78 located on the seed-side face 54B and extending at least partially through to the vacuum-side face 54C such that each seed opening 78 defines a passage through the seed disk 54. The seed openings 78 may be adapted for a particular predetermined seed type so that the seeds, which are larger than the seed openings 78 so as not to pass through the seed openings 78, can be retained against the seed openings 78 and carried away from the seed pool as the seed disk 54 rotates. The seed openings 78 are provided in a circumferential array along the seed disk 54. The spacing of the seed openings 78 may be even or uneven, although a full circumferential array of seed openings 78 with even spacing is hereby illustrated. Further, as shown in FIGS. 5A and 5B, the circumferential array of seed openings 78 may be arranged in more than one row, although a single row is optional. As illustrated, each row of seed openings 78 is located on the seed disk 54 at a single, fixed radial distance from the central axis of rotation 68. Seed agitators of various construction, such as the agitator pockets 220, may be located in a circumferential array at a radial position adjacent to the row(s) of seed openings 78. For example, FIGS. 5A and 5B illustrate a circumferential array of agitators consisting of a single row of agitator pockets 220 formed in the seed-side face 54B of the seed disk 54. The row of agitator pockets 220 is located radially inward of the seed openings 78. The agitator pockets 220 assist in stirring-up or agitating the seeds in the seed pool for encouraging seed retention within the seed openings 78 as the seed disk 54 rotates.

The rear side of the seed disk housing 52B includes an air outlet 80 that is attachable to a vacuum source (not shown) to draw air from within the rear side of the seed disk housing 52B, thereby creating a pressure differential across the seed disk 54. The seed disk housing 52 further includes a seed outlet or opening 82 for transferring the seeds and some air from the seed disk housing 52 and to the ground via an outlet chute 84.

In operation, seeds are dispersed from the storage tank 38 to the mini-hopper 50 via the distribution system 42, entering the mini-hopper 50 through the seed inlet 60. The seeds collect within the mini-hopper 50. The motor 72 is actuated by a controller 86 to rotate the seed disk 54 (via the interface of meshing teeth 54A, 70A). Simultaneously, the vacuum source is actuated to create a pressure differential across the seed disk 54, thereby providing a suction force at the seed openings 78 and holding the seeds against the seed openings 78 as the disk 54 rotates. The singulator 56 knocks off extraneous seeds (those seeds not within one of the seed openings 78) such that each seed opening 78 corresponds to a single seed. Once rotated past the singulator 56, the seeds are kicked out from the seed opening 78 and fall down the seed outlet 82 and to the ground to be planted.

As shown in FIGS. 5A, the hub 66 is a cylindrical post having a head portion 90 and a body portion 92 separated by a round plate structure 94. A cylindrical portion 90B of the head 90 includes an annular channel 96 for engaging a resilient retention member such as an elastomeric O-ring 98 (FIGS. 5A) or a metal C-ring 100 (FIG. 5B). The head 90 further includes a nose 90A formed as a truncated cone (i.e., conical frustum) centered on the rotational axis 68 of the hub 66. A first axial end 66A of the hub 66 is defined by the tip of the truncated cone, the first axial end 66A having a cross-sectional area (and diameter) that is less than the cross-sectional area (and diameter) of the base of the truncated cone. The base of the truncated cone is similar in cross-sectional area (and diameter) to the cylindrical portion 90B of the head 90, excepting for the decreased cross-sectional area of the channel 96.

The body 92 of the hub 66 is cylindrical and has a diameter sized to engage the bearings 68A, 68B in the rear side of the seed disk housing 52B. The body 92 extends from the head 90 (or from the plate structure 94) to a second axial end 66B, opposite the first axial end 66A. Further, the body 92 includes a radial through hole 102 that extends transverse to the rotational axis 68 adjacent to the second axial end 66B of the hub 66. As shown in FIG. 4, a handle 104 is mounted on the second axial end 66B of the hub 66 to permit manual rotation of the hub 66 relative to the seed disk housing 52. The handle 104 slides over the second axial end 66B of the hub 66, having an inner diameter seated against the outer diameter of the body 92 of the hub 66. Once seated, an aperture (not shown) in the handle 104 is aligned with the through hole 102 and a fastener 106 (e.g., a threaded fastener, a pin, a rivet, etc.) is positioned therein such that rotation of the handle 104 results in rotation of the hub 66. Alternatively, the handle may be affixed to the hub 66 without a fastener (e.g., press fit) or with an alternative fastener such as an adhesive.

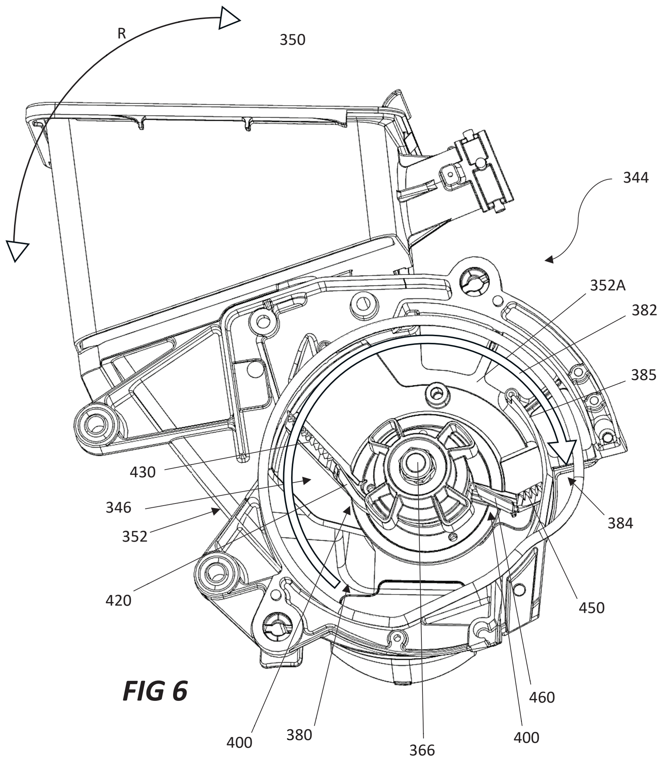

The seed disk 54 includes the seed openings 78, the apertures 112, as well as a central mounting aperture 120 for mounting to the hub 66, and specifically to the head portion 90 of the hub 66. The central mounting aperture 120 extends from the seed-side face 54B of the seed disk 54 through to the vacuum-side face 54C, defining a channel therebetween. As shown in FIG. 6, the diameter of the mounting aperture 120 is variable from the seed-side 54B to the vacuum-side 54C. More specifically, the diameter of the mounting aperture decreases (e.g., linearly, parabolically, etc.) from the seed-side 54B to the vacuum-side 54C.

FIG. 6 illustrates another embodiment of a seed meter 344. The seed meter 344 shown in FIG. 6 may have many or all of the features of the seed meter 44 shown in the preceding figures. In some embodiments, the seed meter 344 shown in FIG. 6 is used on an air seeding implement. In other embodiments, the seed meter 344 is used on a planting implement. The seed meter 344 is generally configured to singulate commodity, such as seeds. The seed meter 344 may include a seed meter housing that holds a metering element (which may be a disc, a bowl, or any other metering member). As shown in FIG. 6, the seed meter 344 includes a seed disk housing 352 having a front or seed side of the seed disk housing 352A. the rear or vacuum side of the seed disk housing 352 is not shown in FIG. 6. The front or seed side of the seed disk housing 352A at least partially defines a first cavity 346, which is configured to receive commodity, e.g., seed, from a mini hopper 350 (which may be similar to the mini hopper 50 shown in other figures). The seed is held in a seed pool or puddle at a lower end of the seed disk housing 352, e.g., at the pick-up zone 380.

A metering member may be held on the hub 366. The metering member of the seed meter 344 is not shown in FIG. 6 so that other, internal components of the seed meter 344 may be seen. In some embodiments, the metering may be a seed metering disc as disclosed elsewhere herein, e.g., seed disk 54. The metering member may be a generally circular disc with apertures configured to use a pressure differential (e.g., positive pressure or negative pressure) to adhere seeds to the disc. In use, the metering member adheres seed (or other commodity) at the pick-up zone 380. Using the pressure differential, the seeds are adhered and retained on the seed-side surface of the metering member, e.g., on the apertures, and are carried along the seed path 382 as the metering member is rotated about the hub 366. The commodity, e.g., seed, is transferred to a delivery system at the hand-off zone 384. The delivery system may be a passive seed delivery system, such as a conventional seed tube, or a component thereof (an example of a passive seed delivery system is shown or described in U.S. Patent No. 4,915,258 to Olson, which is incorporated by reference in its entirety herein). Alternatively, the delivery system may be an active seed delivery system, such as a conveying system e.g., employing an endless member like a brush belt or a flighted belt, or a component thereof, e.g., hand-off wheels, feeder wheels, brush wheels, transfer belt, or any other transfer mechanism (an example of an active seed delivery system is shown or described in U.S. Patent No. 9,510,502 to Garner et al., which is incorporated by reference in its entirety herein).

The seed meter 344 may include a hand-off zone wall 385 separating the hand-off zone 384 from the first cavity 346. In some embodiments, the hand-off zone wall 385 is substantially parallel to the hub 366. The hand-off zone wall 385 may be a generally arcuate wall, which may be generally parallel to the seed path 382.

The entire seed meter 344 is held by a row unit frame on a planting or seeding implement. To allow a user access to the row unit, seed meter 344, delivery system, or other component of the implement, the seed meter 344 may rotate upward and to the right (in FIG. 6), e.g., about arrow R. The seed meter 344 shown in FIG. 6 is in its planting orientation (the rest of the row unit or implement not being shown) such that the pick-up zone 380 is substantially at the bottom of the first cavity 346 of the seed meter 344. To access the various components of the systems (e.g., seed metering or seed delivery), the seed meter 344 may be rotated up and to the right (in FIG. 6) roughly in the direction of arrow R. In some embodiments, the seed meter 344 may have a latch, hook, or other fixing mechanism that allows it to stay in its upward or maintenance position. When the seed meter 344 is to be put back into its planting orientation, it may be rotated down and to the left (in FIG. 6) in the direction of arrow R. In some embodiments, the seed meter 344 may be rotated into an upward position for transport or other reasons.

When planting, a puddle of seeds is held at the pick-up zone 380 so that the metering member may pick up seeds for planting. When planting is stopped, the puddle or pool of seeds remains at the pick-up zone 380. Without something to block the pick-up zone 380, the seed puddle will shift when the meter is rotated into its upward, transport, maintenance, or access position or orientation. When the delivery system is a seed tube, the seed puddle can shift all the way around the first cavity 346 of the seed meter 344, e.g., substantially along the seed path 382, and fall out of the seed meter 344 through the hand-off zone 384 and out of the seed tube. Such seed exit of the meter is generally unintentional and undesirable and can result in substantial waste of seed. Therefore, the seed meter 344 shown in FIG. 6 includes a seed curtain/valve assembly 400. In systems having an active seed delivery system, seed may not fall out like in a passive seed delivery system, but when rotated upward, seed may enter undesirable locations or components of the system.

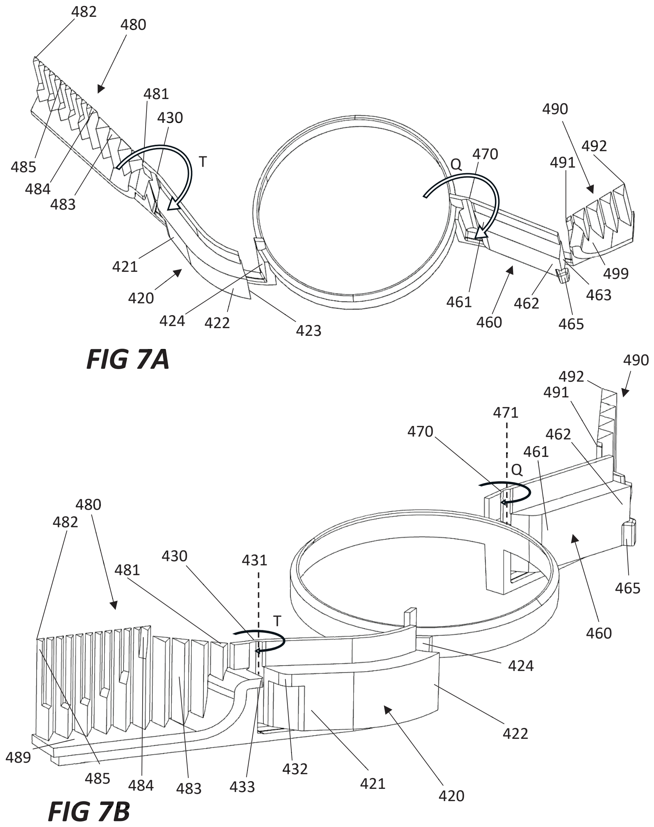

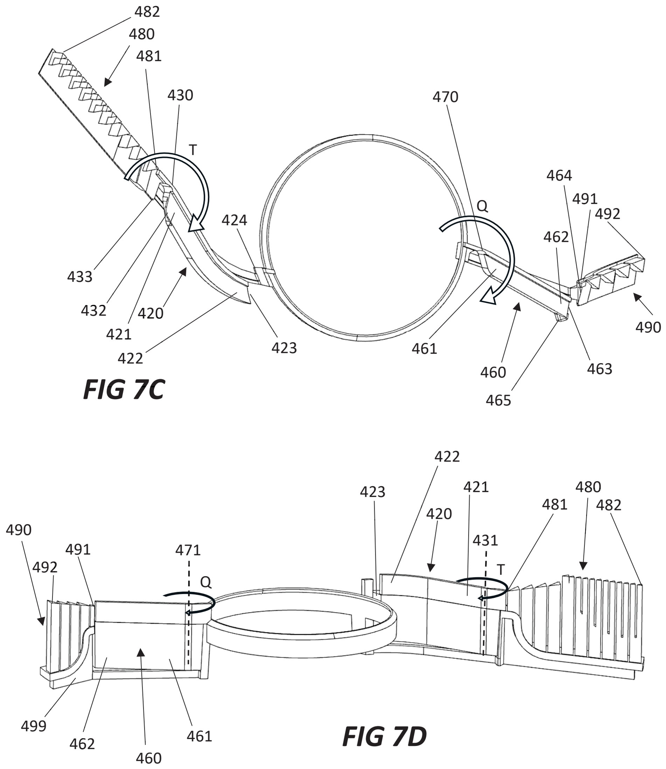

The various components of the seed curtain/valve assembly 400 will be described in additional detail with respect FIGS. 7A-7D. With continued reference to FIG. 6, the seed curtain/valve assembly 400 includes a first valve on the beginning side of the seed path 382 and a second valve on the radially opposite side of the disc on the (near or radially inward the hand-off zone 384 of the seed metering member) or hub, e.g., proximate the ending or terminal side of the seed path 382. The seed curtain/valve assembly 400 also includes a first seed curtain proximate the first valve and a second seed curtain proximate the second valve. In some embodiments, the seed curtain/valve assembly 400 may include only the first valve. In some embodiments, the seed curtain/valve assembly 400 may include only the second valve. In some embodiments, the seed curtain/valve assembly 400 includes both the first valve and the second valve. In some embodiments, the seed curtain/valve assembly 400 does not include the first seed curtain. In some embodiments, the seed curtain/valve assembly 400 does not include the second seed curtain. In some embodiments, the seed curtain/valve assembly 400 includes the first seed curtain. In some embodiments, the seed curtain/valve assembly 400 includes the second seed curtain. In some embodiments the seed curtain/valve assembly 400 includes both the first seed curtain and the second seed curtain.

In use, the first valve of the seed curtain/valve assembly 400 hinges open, e.g., downward, so that seed (e.g., doubles) may fall down, to the left (in FIG. 6) of the hub 366 and past the open first valve. In other words, when the seed meter 344 is in a first or planting orientation the first valve is in a first or open position so that commodity or particles or seed may freely pass the first valve. As will be discussed in more detail with respect to FIGS. 7A-7D, the first valve hangs or is positioned downward in its first or open position. Seed is picked up at the pick-up zone 380 by the metering member and carried along the seed path 382. Seeds, such as doubles or other seeds may fall off the metering member (at some point along the seed path 382. When seeds fall off the metering member to the left (in FIG. 6) of the vertical intersecting the hub 366 the seeds will fall down on top of and through the first valve. Because the first valve is in the first or open position, the seed may pass the first valve and back into the seed puddle at the pick-up zone 380. In much the same way, when the seed meter 344 is in a first or planting orientation the second valve is in a first or open position so that commodity or particles or seed may freely pass the second valve. As will be discussed in more detail with respect to FIGS. 7A-7D, the second valve hangs or is positioned downward in its first or open position. When seeds fall off the metering member to the right (in FIG. 6) of the vertical intersecting the hub 366 the seeds will fall down on top of and through the second valve. Because the second valve is in the first or open position, the seed may pass the second valve and back into the seed puddle at the pick-up zone 380.

When the seed meter 344 is in a second or maintenance, access, or transport position the first valve is in a second or closed position so that commodity or particles or seed are blocked by the valve. As will be discussed in more detail with respect to FIGS. 7A-7D, the hinge may be forced into its closed position by gravity, a material spring force, or a spring. In its second or closed position, the second or terminal end of first valve abuts a radially inner surface, e.g., a surface near at or part of the hub 366. When the seed meter 344 is tipped upwards, the first valve closes and prevents the seed puddle at pick-up zone 380 from moving past the first valve (in FIG. 6, the second valve prevents the seed puddle from moving up and to the right, e.g., clockwise around the hub 366). Advantageously, the weight or mass of the seed puddle may push against and hold the first valve in its second or closed position. The closure of the first valve may stop passage of seed past the first valve when the seed meter 344 is in its second position and thereby prevent loss or waste of commodity, e.g., seed. When the seed curtain/valve assembly 400 includes the second valve, the second valve is moved or hinges into a second or closed position when the seed meter 344 is moved into the second or maintenance, access, or transport position. Like the first valve, the hinge of the second valve may be forced into its closed position by gravity, a material spring force, or a spring. In its second or closed position, the second or terminal end of the second valve abuts a radially inner surface, e.g., a surface near at or part of the hub 366. When the seed meter 344 is tipped upwards, the second valve closes and prevents the seed puddle at pick-up zone 380 from moving past the first valve (in FIG. 6, the second valve prevents the seed puddle from moving down and to the right, e.g., counterclockwise around hub 366). Advantageously, the weight or mass of the seed puddle may push against and hold the second valve in its second or closed position. The closure of the second valve may stop passage of seed past the second valve when the seed meter 344 is in its second position and thereby prevent loss or waste of commodity, e.g., seed.

FIGS. 7A-7D illustrate various views of a seed curtain/valve assembly 400. As shown, the seed curtain/valve assembly 400 may include a first valve 420 on a first lateral side. The first valve 420 may have a first valve first end 421 and a first valve second end 422. The first valve second end 422 terminates in a first valve abutment surface 423 that is configured to sealingly mate, as described elsewhere herein, with a first valve closing surface 424. The first valve 420 is attached or coupled at the first valve first end 421 of the first valve 420 to the first hinge 430. The first hinge 430 allows the first valve 420 to rotate about the first hinge axis 431 (see FIG. 7B) in the direction of arrow T (arrow T will be understood to be in the direction of the arrow and in the opposite direction of the arrow).

In some embodiments, the first hinge 430, or any other hinge disclosed herein, is a living hinge. In some embodiments, the first hinge 430, or any other hinge disclosed herein, is a conventional hinge, e.g., a butt hinge. When the first hinge 430 is a living hinge the material of the living hinge may provide a spring force to the first hinge 430, e.g., either biasing the first hinge 430 towards open, or biasing the first hinge 430 towards closed, or biasing or holding the first hinge 430 between open and closed. The first hinge 430, regardless of whether the first hinge 430 is a living hinge or a conventional hinge, may further include a spring to bias the first hinge 430 or the first valve 420. In some embodiments, a spring biases the first hinge 430 and/or the first valve 420 open. In other embodiments, a spring biases the first hinge 430 and/or the first valve 420 closed. In still other embodiments, a spring holds the first hinge 430 and/or the first valve 420 between open and closed.

The first valve abutment surface 423 of the first valve 420 is configured such that when the first valve 420 is in the closed position the first valve abutment surface 423 sealingly mates with the first valve closing surface 424, such that commodity, e.g., the commodity being metered (such as seed) is not permitted to pass between the first valve abutment surface 423 and the first valve closing surface 424.

In some embodiments, the first hinge 430 has a first hinge first abutment surface 432 and a first hinge second abutment surface 433 configured to limit how far the first valve 420 can open. As shown in FIG. 7B, the first hinge first abutment surface 432 is located on the first valve first end 421 of the first valve 420. And, the first hinge second abutment surface 433 is located on the first seed curtain first end 481 of the first seed curtain 480. The first hinge first abutment surface 432 and the first hinge second abutment surface 433 may be configured so that the first hinge first abutment surface 432 contacts the first hinge second abutment surface 433 at the maximum opening position of the first valve 420 such that the first valve 420 may not open further.

The first valve 420 is in its first or open position when the seed meter 344 is in its first or seeding position, e.g., during seeding use. When the first valve 420 is in its maximally open position, e.g., when the first hinge first abutment surface 432 is contacting the first hinge second abutment surface 433, the first valve 420 hangs substantially downward, e.g., the top or inner surface of the first valve 420 is substantially vertical or steeply sloped. When the first valve 420 is in its maximally open position, as discussed elsewhere herein, seed is permitted to fall onto and through the first valve 420 and past the first valve 420 into the seed pool or puddle.

When the seed meter 344 is rotated into its second position, e.g., during transport, maintenance, access, etc., the first valve 420 rotates about the first hinge axis 431 such that the first hinge first abutment surface 432 meets the first valve closing surface 424 closing the first valve 420.

The first valve 420 has a first lateral side facing the inner surface of the seed meter 344, e.g., the inner surface of the first cavity 346. The first valve 420 has a second lateral side facing the seed metering member, such as a hub of the seed metering disc or the seed metering disc. In some embodiments, the first lateral side of the first valve 420 is spaced a distance from the inner surface of the seed meter 344, the distance being configured such that the commodity being metered cannot pass between the inner surface of the seed meter 344 and the first lateral side of the first valve 420 (e.g., the distance is smaller than the size of the commodity being metered, such as the smallest cross-sectional dimension of the commodity being metered). In some embodiments, the second lateral side of the first valve 420 is spaced a distance from the seed metering member, the distance being configured such that the commodity being metered cannot pass between the inner surface of the seed meter 344 and the second lateral side of the first valve 420 (e.g., the distance is smaller than the size of the commodity being metered, such as the smallest cross-sectional dimension of the commodity being metered).

In some embodiments, the first valve closing surface 424 against which the first valve abutment surface 423 seals is located on a support ring structure of the seed curtain/valve assembly 400, as shown in FIG. 7A. In other embodiments, the first valve closing surface 424 against which the first valve abutment surface 423 seals is located on an inner surface of the seed meter 344. In still other embodiments, the first valve closing surface 424 against which the first valve abutment surface 423 seals is located on another structure the permits effective closing of the first valve 420 such that when in the second or closed position, the metered commodity is blocked or substantially blocked from passing by the first valve 420.

The seed curtain/valve assembly 400 may include a second valve 460 on a second lateral side. The second valve 460 may have a second valve first end 461 and a second valve second end 462. The second valve first end 461 terminates in a second valve abutment surface 463 that is configured to sealingly mate, as described elsewhere herein, with a second valve closing surface 464. The second valve 460 is attached or coupled at the second valve first end 461 of the second valve 460 to the second hinge 470. The second hinge 470 allows the second valve 460 to rotate about the second hinge axis 471 (see FIG. 7B) in the direction of arrow Q (arrow Q will be understood to be in the direction of the arrow and in the opposite direction of the arrow).

In some embodiments, the second hinge 470 is a living hinge. In some embodiments, the second hinge 470 is a conventional hinge. When the second hinge 470 is a living hinge the material of the living hinge may provide a spring force to the second hinge 470, e.g., either biasing the second hinge 470 towards open, or biasing the second hinge 470 towards closed, or biasing or holding the second hinge 470 between open and closed. The second hinge 470, regardless of whether the second hinge 470 is a living hinge or a conventional hinge, may further include a spring to bias the second hinge 470 or the second valve 460. In some embodiments, a spring biases the second hinge 470 and/or the second valve 460 open. In other embodiments, a spring biases the second hinge 470 and/or the second valve 460 closed. In still other embodiments, a spring holds the second hinge 470 and/or the second valve 460 between open and closed.

The second valve abutment surface 463 of the second valve 460 is configured such that when the second valve 460 is in the closed position the second valve abutment surface 463 sealingly mates with the second valve closing surface 464, such that commodity, e.g., the commodity being metered (such as seed) is not permitted to pass between the second valve abutment surface 463 and the second valve closing surface 464.

In some embodiments, not shown, the second hinge 470 has a second hinge first abutment surface and a second hinge second abutment surface, similar or identical to the first hinge first abutment surface 432 and first hinge second abutment surface 433 of the first hinge 430, configured to limit how far the second hinge 470 can open.

The second valve 460 is in its first or open position when the seed meter 344 is in its first or seeding position, e.g., during seeding use. When the second valve 460 is in its maximally open position, e.g., when the second valve second end 462 is contacting the second valve abutment surface 463, the second valve 460 hangs substantially downward, e.g., the top or inner surface of the second valve 460 is substantially vertical or steeply sloped. When the second valve 460 is in its maximally open position, as discussed elsewhere herein, seed is permitted to fall onto and through the second valve 460 and past the second valve 460 into the seed pool or puddle.

When the seed meter 344 is rotated into its second position, e.g., during transport, maintenance, access, etc., the second valve 460 rotates about the second hinge axis 471 such that the second valve abutment surface 463 meets the second valve closing surface 464 closing the second valve 460.

The second valve 460 has a first lateral side facing the inner surface of the seed meter 344, e.g., the inner surface of the first cavity 346. The second valve 460 has a second lateral side facing the seed metering member, such as a hub of the seed metering disc or the seed metering disc. In some embodiments, the first lateral side of the second valve 460 is spaced a distance from the inner surface of the seed meter 344, the distance being configured such that the commodity being metered cannot pass between the inner surface of the seed meter 344 and the first lateral side of the second valve 460 (e.g., the distance is smaller than the size of the commodity being metered, such as the smallest cross-sectional dimension of the commodity being metered). In some embodiments, the second lateral side of the second valve 460 is spaced a distance from the seed metering member, the distance being configured such that the commodity being metered cannot pass between the inner surface of the seed meter 344 and the second lateral side of the second valve 460 (e.g., the distance is smaller than the size of the commodity being metered, such as the smallest cross-sectional dimension of the commodity being metered).

In some embodiments, the second valve closing surface 464 against which the second valve abutment surface 463 seals is located on an inner wall of the first cavity 346. In some embodiments, the second valve closing surface 464 against which the second valve abutment surface 463 seals is located on the hand-off zone wall 385. In other embodiments, the second valve closing surface 464 against which the second valve abutment surface 463 seals is located on an inner end, e.g., radially innermost end, of a second seed curtain 490, e.g., the second seed curtain first end 491 of the second seed curtain 490. In still other embodiments, the second valve closing surface 464 against which the second valve abutment surface 463 seals is located on another structure the permits effective closing of the second valve 460 such that when in the second or closed position, the metered commodity is blocked or substantially blocked from passing by the second valve 460.

In some embodiments, the second valve 460 includes at the second valve second end 462 a second valve stop 465 configured to prevent the second valve 460 from being forced based the second valve closing surface 464.

In some embodiments, the first valve 420 has an arcuate shape between the first valve first end 421 and the first valve second end 422. The arcuate share of the first valve 420 may advantageously provide resistance against the weight of the seed pool when the first valve 420 is in its second or closed position.

In some embodiments, the second hinge 470 to which the second valve first end 461 of the second valve 460 is coupled is located on a support ring structure of the seed curtain/valve assembly 400, as shown in FIG. 7A. In other embodiments, the second hinge 470 to which the second valve first end 461 of the second valve 460 is coupled is located on an inner surface of the seed meter 344. In still other embodiments, the second hinge 470 to which the second valve first end 461 of the second valve 460 is coupled is located on another structure that permits effective closing of the second valve 460 such that when in the second or closed position, the metered commodity is blocked or substantially blocked from passing by the second valve 460 and when in the first or open position, the metered commodity is allowed to pass by, e.g., freely pass by, the second valve 460.

The first hinge axis 431 (about which first hinge 430 rotates or moves) may be parallel or substantially parallel to the hub 366. The first hinge axis 431 may be perpendicular or substantially perpendicular to the seed metering member, e.g., seed disc. The second hinge axis 471 (about which second hinge 470 rotates or moves) may be parallel or substantially parallel to the hub 366 and/or the first hinge axis 431. The second hinge axis 471 may be perpendicular or substantially perpendicular to the seed metering member, e.g., seed disc.

In some embodiments, the first valve abutment surface 423 at the first valve second end 422 of the first valve 420 is substantially perpendicular to the seed metering member, e.g., seed disc. In some embodiments, the first valve abutment surface 423 at the first valve second end 422 of the first valve 420 is oblique, e.g., not perpendicular, to the seed metering member, e.g., seed disc. In some embodiments, the second valve abutment surface 463 at the second valve second end 462 of the second valve 460 is substantially perpendicular to the seed metering member, e.g., seed disc. In some embodiments, the second valve abutment surface 463 at the second valve second end 462 of the second valve 460 is oblique, e.g., not perpendicular, to the seed metering member, e.g., seed disc. In some embodiments, the seed curtain/valve assembly 400 includes a first seed curtain 480. The first seed curtain 480 includes a first seed curtain first end 481 radially inward and a first seed curtain second end 482 radially outward. In some embodiments, the first seed curtain first end 481 of the first seed curtain 480 may be coextensive with the first hinge 430. In some embodiments, the first seed curtain first end 481 of the first seed curtain 480 may be coupled with the first hinge 430. In some embodiments, the first seed curtain second end 482 of the first seed curtain 480 may terminate proximate an inner surface of the first cavity 346 of the seed meter 344, e.g., such that the metered commodity may not pass (be substantially blocked by) between the first seed curtain second end 482 and the inner surface of the first cavity 346.

With reference to FIG. 7B, the first seed curtain 480 includes a number of fingers or bristles or protrusions or projections extending from a first seed curtain base 489. The fingers may extend from the first seed curtain base 489 in a direction substantially perpendicular to the surface of the seed metering member, e.g., the seed disc. As shown in FIG. 7B, the first seed curtain 480 may have different sized fingers, which may be the same shape or of different shapes. The outer ends or the distal ends of the fingers may terminate proximal the seed metering member, e.g., the seed disc or a hub holding the seed disc. The distal ends of the fingers may be spaced from the seed metering member a distance such that the metered commodity may not pass between the distal ends of the fingers and the surface of the seed metering member.

As shown, the fingers decrease in size, e.g., about a cross-sectional dimension, from the radially inner end, e.g., the first seed curtain first end 481, to the radially outer end, e.g., the first seed curtain second end 482. As shown in FIG. 7B, the fingers may also decrease in size, e.g., about a cross-sectional dimension from the finger's base to the finger's distalmost end. As shown, a single radially outward finger may split into two, smaller or finer fingers. The radially inner fingers may be configured, e.g., have a cross-sectional dimension, such that the metered commodity, e.g., seed, may not pass through (e.g., may not easily pass through) the radially inner fingers. The radially inner fingers may be first seed curtain first sized member 483. The radially outer fingers may be configured, e.g., have a cross-sectional dimension, such that the metered commodity, e.g., may pass through the radially outer fingers when held on the surface of the seed metering member by the pressure differential. The radially outer fingers may be first seed curtain third sized member 485. One of more first seed curtain second sized member 484 may be included between the one or more first seed curtain first sized member 483 and the one or more first seed curtain third sized member 485. The radially outer fingers may serve as a doubles eliminator and knock off seeds (e.g., doubles) that are only weakly held on an aperture of the seed metering member by the pressure differential. The fingers may be configured such that seeds that fall onto an outer or upper surface of the fingers, whether radially inward or radially outward, are prevented from passing through the fingers and directed inward, e.g., inward toward the first valve 420 of the seed curtain/valve assembly 400.

In some embodiments, the fingers of the first seed curtain 480, e.g., some or all (e.g., the inner fingers, the middle fingers, and/or the outer fingers) of the fingers are cross-sectionally triangular. In some embodiments, the fingers of the first seed curtain 480, e.g., some or all of the fingers (e.g., the inner fingers (first seed curtain first sized member 483), the middle fingers (first seed curtain second sized member 484), and/or the outer fingers (first seed curtain third sized member 485)) are round, oval, square, diamond, or any other shape that advantageously blocks or passes commodity based on the size of the fingers. In some embodiments, in which the fingers have a shape over than round, the fingers have a long dimension tangential or parallel to the tangent of the seed path 382, which advantageously resists deflection and prevents the passage of seed therethrough. As shown, the fingers including the largest radially inward fingers, the intermediate middle fingers, and the smallest radially outward fingers have triangular cross-sectional shapes. The point of the triangle is facing the oncoming seed, e.g., opposite the direction of the seed path 382. The flat of the triangle is opposite the oncoming seed, e.g., in the direction of the seed path 382. This configuration advantageously presents a relatively broken front face through which the seed, adhered to the face of the metering disc, may pass, e.g., be pushed through, but a relatively continuous or flat rear face against which any dislodged seed may not pass through and against which such dislodged seed is guided down, towards the first valve 420 through which it may fall (when the seed meter 344 is in the metering or first position).

In some embodiments, the radially inner fingers of the first seed curtain 480 are configured to resiliently allow passage of agitators (positive structures) on the seed-side face of the seed metering member, e.g., seed agitation pins, protrusions, or other features. In seed meters where no positive structure agitators are used, e.g., where no agitators are used or where negative agitators are used (e.g., pockets or recesses for agitation), the radially inner fingers, e.g., the largest dimension fingers, may not be included. In such embodiments, the inner portion of first seed curtain 480 may be solid.

The first seed curtain 480 may advantageously be positioned at an angle with respect to the horizontal so that commodity that lands on the first seed curtain 480 e.g., commodity that was dislodged from the seed metering member after passing the first seed curtain 480 but before passing the vertical intersecting the hub 366, may naturally be guided to the first valve 420. In some embodiments, the first seed curtain 480 is positioned at an angle of about -2°, -4°, -6°, -8°, -10°, -12°, -14°, -16°, -18°, -20°, -22°, -24°, -26°, -28°, -30°, - 32°, -34°, -36°, -38°, -40°, -42°, -44°, -46°, -48°, -50°, -52°, -54°, -56°, -58°, -60°, -62°, - 64°, -66°, -68°, -70°, -72°, -74°, -76°, -78°, -80°, or any other angle that advantageously guides a loose seed toward the valve. In some embodiments, the first seed curtain 480 is positioned at an angel of less than about -80°, -78°,-76°, -74°, -72°, -70°, -68°, -66°, -64°, -62°, -60°, -58°, -56°, -54°, -52°, -50°, -48°, -46°, -44°, -42°, -40°, -38°, -36°, -34°, -32°, - 30°, -28°, -26°, -24°, -22°, -20°, -18°, -16°, -14°, -12°, -10°, or any other angle that advantageously guides a loose seed toward the valve.

In some embodiments, the seed curtain/valve assembly 400 does not include a second seed curtain 490.

In some embodiments, the seed curtain/valve assembly 400 includes a second seed curtain 490. The second seed curtain 490 includes a second seed curtain first end 491 radially inward and a second seed curtain second end 492 radially outward. In some embodiments, the second seed curtain first end 491 of the second seed curtain 490 may form all or part of the second valve closing surface 464. In some embodiments, the second seed curtain second end 492 of the second seed curtain 490 may terminate proximate an inner surface of the first cavity 346 of the seed meter 344, e.g., such that the metered commodity may not pass (be substantially blocked by) between the second seed curtain second end 492 and the inner surface of the first cavity 346. In other embodiments, the second seed curtain second end 492 of the second seed curtain 490 may terminate proximate an inner surface of the hand-off zone wall 385, e.g., such that the metered commodity may not pass (be substantially blocked by) between the second seed curtain second end 492 and the inner surface of the hand-off zone wall 385.

With reference to FIG. 7A, the second seed curtain 490 includes a number of fingers or bristles or protrusions extending from a second seed curtain base 499. The fingers may extend from the second seed curtain base 499 in a direction substantially perpendicular to the surface of the seed metering member, e.g., the seed disc. As shown in FIG. 7A, the second seed curtain 490 may have fingers of the same size (though they may be of different sizes, as disclosed with respect to the first seed curtain 480), which may be the same shape or of different shapes. The outer ends or the distal ends of the fingers may terminate proximal the seed metering member, e.g., the seed disc or a hub holding the seed disc. The distal ends of the fingers may be spaced from the seed metering member a distance such that the metered commodity may not pass between the distal ends of the fingers and the surface of the seed metering member.

The fingers of the second seed curtain 490 may be configured, e.g., have a cross-sectional dimension, such that the metered commodity, e.g., seed, may not pass through (e.g., may not easily pass through) the radially inner fingers. In some embodiments, the fingers of the second seed curtain 490, e.g., some or all of the fingers, are cross-sectionally triangular. In some embodiments, the fingers of the second seed curtain 490, e.g., some or all of the fingers (e.g., the inner fingers, the middle fingers, and/or the outer fingers) are round, oval, square, diamond, or any other shape that advantageously blocks or passes commodity based on the size of the fingers. In some embodiments, in which the fingers have a shape over than round, the fingers have a long dimension tangential or parallel to a tangent of the seed path 382, which advantageously resists deflection and prevents the passage of seed therethrough.

As shown, the fingers including the radially inward fingers, the middle fingers, and the radially outward fingers have triangular cross-sectional shapes. The point of the triangle is facing downward, e.g., toward the seed puddle. The flat of the triangle is opposite the seed puddle. This configuration advantageously presents a relatively continuous or flat rear face against which any dislodged seed may not pass through and against which such dislodged seed is guided down, towards the second valve 460 through which it may fall (when the seed meter 344 is in the metering or first position).

In some embodiments, the radially inner fingers of the second seed curtain 490 are configured to resiliently allow passage of agitators (positive structures) on the seed-side face of the seed metering member, e.g., seed agitation pins, protrusions, or other features. In seed meters where no positive structure agitators are used, e.g., where no agitators are used or where negative agitators are used (e.g., pockets or recesses for agitation), fingers may not be included. In such embodiments, the second seed curtain 490 may be solid or the second seed curtain 490 may be omitted entirely, e.g., the second valve abutment surface 463 of the second valve 460 may engage with a second valve closing surface 464 located on an inner surface of the hand-off zone wall 385.

The second seed curtain 490 may advantageously be positioned at an angle with respect to the horizontal so that commodity that lands on the second seed curtain 490, e.g., commodity that was dislodged from the seed metering member after passing the first seed curtain 480 and after passing the vertical intersecting the hub 366, may naturally be guided to the second valve 460. In some embodiments, the second seed curtain 490 is positioned at an angle of about 2°, 4°, 6°, 8°, 10°, 12°, 14°, 16°, 18°, 20°, 22°, 24°, 26°, 28°, 30°, 32°, 34°, 36°, 38°, 40°, 42°, 44°, 46°, 48°, 50°, or any other angle that advantageously guides a loose seed toward the valve. In some embodiments, the first seed curtain 480 is positioned at an angel of less than about 50°, 48°, 46°, 44°, 42°, 40°, 38°, 36°, 34°, 32°, 30°, 28°, 26°, 24°, 22°, 20°, 18°, 16°, 14°, 12°, 10°, or any other angle that advantageously guides a loose seed toward the valve.

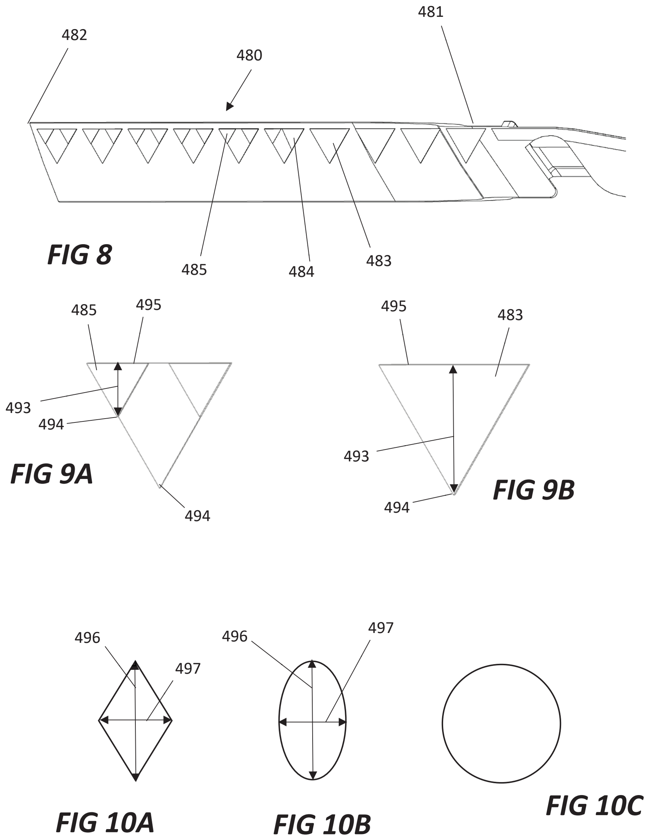

FIG. 8 illustrates a top view of the first seed curtain 480 of the seed curtain/valve assembly 400. The various fingers, projections, protrusions or bristles of the seed curtain may be seen, essentially in cross-section, including from right, at the first seed curtain first end 481, to left, at the first seed curtain second end 482. On the right side of the first seed curtain 480, e.g., toward the first seed curtain first end 481, there are four first seed curtain first sized members 483. On the left side of the first seed curtain 480, e.g., toward the first seed curtain second end 482, there are eleven first seed curtain third sized member 485. In between the first seed curtain first sized members 483 and first seed curtain third sized members 485, there is a single first seed curtain second sized member 484. While four, one and eleven first seed curtain first sized member 483, first seed curtain second sized member 484, and first seed curtain third sized member 485, respectively are shown, it will be understood that any number of members may be used.

As can be easily seen in FIG. 8, the first seed curtain third sized members 485 may extend from the first seed curtain base 489 beginning the same size as the first seed curtain first sized member 483. Then, at a point between the first seed curtain base 489 and the distal ends of the protrusions, the larger protrusion splits into one or more, here two, smaller protrusions. The larger protrusion splitting into smaller protrusions (e.g., having smaller cross-sectional dimensions) allows a fine tuning of the protrusion flexibility as thicker, solid protrusions have significantly more rigidity than do thinner protrusions. In some embodiments, the split from thick protrusion, e.g., dimensionally equivalent to the first seed curtain first sized member 483, occurs at a percentage between the first seed curtain base 489 and the distal ends of the protrusions of about 75%, 70%, 65%, 60%, 55%, 50%, 45%, 40%, 35%, 30%, 25%, 20%, 18%, 16%, 14%, 12%, 10%, 8%, 6%, or 4%, or any other percentage that achieves the proper finger rigidity while allowing metered seed passage (e.g., on a vacuum disc), but removing doubles. In some embodiments, the split from thick protrusion, e.g., dimensionally equivalent to the first seed curtain first sized member 483, occurs at a percentage between the first seed curtain base 489 and the distal ends of the protrusions of less than about 75%, 70%, 65%, 60%, 55%, 50%, 45%, 40%, 35%, 30%, 25%, 20%, 18%, 16%, 14%, 12%, 10%, 8%, 6%, or 4%, or any other percentage that achieves the proper finger rigidity while allowing metered seed passage (e.g., on a vacuum disc), but removing doubles. In some embodiments, there is no split and the protrusion, e.g., the first seed curtain third sized member 485 or the first seed curtain second sized member 484 or the first seed curtain first sized member 483, extends all the way from the first seed curtain base 489 to the protrusion's distalmost end.

FIG. 9A illustrates a first seed curtain third sized member 485 and FIG. 9B illustrates a first seed curtain first sized member 483. Each triangular projection or protrusion, e.g., first seed curtain third sized member 485 or first seed curtain first sized member 483, has a triangle leading point 494, a triangle trailing edge 495, and a triangle axis 493. In some embodiments, the ratio of triangle axis 493 of the first seed curtain third sized member 485 to the triangle axis 493 of the first seed curtain first sized member 483 is about 50%, 48%, 46%, 44%, 42%, 40%, 38%, 36%, 34%, 32%, 30%, 28%, 26%, 24%, 22%, 20%, 18%, 16%, 14%, 12%, 10%, 8%, 6%, or any other percentage that achieves the proper finger rigidity while allowing metered seed passage (e.g., on a vacuum disc), but removing doubles. In some embodiments, the ratio of triangle axis 493 of the first seed curtain third sized member 485 to the triangle axis 493 of the first seed curtain first sized member 483 is less than about 50%, 48%, 46%, 44%, 42%, 40%, 38%, 36%, 34%, 32%, 30%, 28%, 26%, 24%, 22%, 20%, 18%, 16%, 14%, 12%, 10%, 8%, 6%, or any other percentage that achieves the proper finger rigidity while allowing metered seed passage (e.g., on a vacuum disc), but removing doubles.

In some embodiments, the ratio of triangle axis 493 of the first seed curtain second sized member 484 to the triangle axis 493 of the first seed curtain first sized member 483 is about 80%, 78%, 76%, 74%, 72%, 70%, 68%, 66%, 64%, 62%, 60%, 58%, 56%, 54%, 52%, 50%, 48%, 46%, 44%, 42%, 40%, 38%, 36%, 34%, 32%, 30%, or any other percentage that achieves the proper finger rigidity while allowing metered seed passage (e.g., on a vacuum disc), but removing doubles. In some embodiments, the ratio of triangle axis 493 of the first seed curtain second sized member 484 to the triangle axis 493 of the first seed curtain first sized member 483 is less than about 80%, 78%, 76%, 74%, 72%, 70%, 68%, 66%, 64%, 62%, 60%, 58%, 56%, 54%, 52%, 50%, 48%, 46%, 44%, 42%, 40%, 38%, 36%, 34%, 32%, 30%, or any other percentage that achieves the proper finger rigidity while allowing metered seed passage (e.g., on a vacuum disc), but removing doubles.

In some embodiments, the triangle axis 493 is substantially parallel to the tangent of the seed path 382. In some embodiments, the triangle axis 493 is slightly off parallel to the tangent of the seed path 382. The triangle axis 493 may be at an angle to the tangent of the seed path by about 1°, 2°, 3°, 4°, 5°, 6°, 7°, 8°, 9 °, or 10°. The triangle axis 493 may be at an angle to the tangent of the seed path 382 by less than about 1°, 2°, 3°, 4°, 5°, 6°, 7°, 8°, 9 °, or 10°. In some embodiments, the triangle axis 493 of each protrusion is parallel to the triangle axis 493 of each other protrusion.

The triangle-shaped protrusions may be isosceles, e.g., the protrusions shown in the figures are isosceles. In such isosceles protrusions, the ratio between the triangle axis 493 and the triangle trailing edge 495 may be about 80%, 82%, 84%, 86%, 88%, 90%, 92%, 94%, 96%, 98%, 100%, 102%, 104%, 106%, 108%, 110%, 112%, 114%, 116%, 118%, or 120%.

The triangle trailing edge 495 of each triangular projection may advantageously be perpendicular or substantially perpendicular to the seed path 382. Each triangle trailing edge 495 being perpendicular or substantially perpendicular to the seed path 382 allows the collective triangle trailing edges 495 of all the protrusions to create a substantially flat surface, e.g., a discontinuous flat surface that resists seeds and directs seeds in a desired direction, e.g., toward the first valve 420 of the seed curtain/valve assembly 400. This configuration may be seen particularly well in FIG. 7D.

The seed curtains shown in FIGS 7A-7D and 8 illustrate a single line of projections, along a seed curtain, e.g., parallel to a seed curtain axis. Other embodiments include projections in other configurations, including more than a single line, e.g., two lines three lines, or more lines. Yet other embodiments, include projections not arranged linearly, projection-to-projection. Some embodiments, the projections are similar to brush bristles in that they are spaced from each other, but more evenly distributed and not wholly linear, in a single-file line.

In some embodiments, the configuration of triangle leading point 494 and triangle trailing edge 495 may be flipped such that it is the flat edge that is first, e.g., along the seed path 382, and the triangle point trails or is second, e.g., along the seed path 382.

While triangular protrusions may provide certain benefits, other shapes of protrusions may be used. FIG. 10A illustrates the cross-section of a diamond-shaped protrusion having a major axis 496 and a minor axis 497. In some embodiments, the major axis 496 of the diamond-shaped protrusion is aligned parallel or substantially parallel to a tangent of the seed path 382 (e.g., the major axis 496 may be oriented the same as or substantially the same as the triangle axis 493 of triangular protrusions). The smaller dimension of the diamond, e.g., long the minor axis 497 may be aligned perpendicular or substantially perpendicular to a tangent of the seed path 382. In some embodiments, the major axis 496 of the diamond-shaped protrusion is aligned perpendicular or substantially perpendicular to a tangent of the seed path 382. The smaller dimension of the diamond, e.g., long the minor axis 497 may be aligned parallel or substantially parallel to a tangent of the seed path 382. It will be understood that the triangle axis 493 of a triangular protrusion may be oriented in the same or similar fashion to the major axis 496 of other protrusions described herein. FIG. 10B illustrates the cross-section of an oval-shaped, or elliptically-shaped protrusion having a major axis 496 and a minor axis 497. The major axis 496 and minor axis 497 of the protrusion shown in FIG. 10 may be aligned in the same way as the major axis 496 and minor axis 497 of the diamond-shaped protrusion shown in FIG. 10A. The minor axis of the protrusions described herein has a smaller dimension than the major axis. In some embodiments, the ratio between the minor axis and the major axis is about 98%, 96%, 94%, 92%, 90%, 88%, 86%, 84%, 82%, 80%, 78%, 76%, 74%, 72%, 70%, 68%, 66%, 64%, 62%, 60%, 58%, 56%, 54%, 52%, 50%, 48%, 46%, 44%, 42%, or 40%. In some embodiments, the ratio between the minor axis and the major axis is less than 100% but greater than about 50%, 52%, 54%, 56%, 58%, 60%, 62%, 64%, 66%, 68%, 70%, 72%, 74%, 76%, 78%, 80%, 82%, 84%, 86%, 88%, 90%, 92%, 94%, 96%, 98%, or 99%. FIG. 10C illustrates the cross-section of a round-shaped protrusion.

The protrusions of the first seed curtain 480 (including any of the first seed curtain first sized member 483, first seed curtain second sized member 484, or first seed curtain third sized member 485) and/or the protrusions of the second seed curtain 490 may have a largest cross-sectional dimension of about 6mm, 5.8mm, 5.6mm, 5.4mm, 5.2mm, 5mm, 4.8mm, 4.6mm, 4.4mm, 4.2mm, 4mm, 3.8mm, 3.6mm, 3.4mm, 3.2mm, 3mm, 2.8mm, 2.6mm, 2.4mm, 2.2mm, 2mm, 1.8mm, 1.6mm, 1.4mm, 1.2mm, 1mm, 0.8mm, 0.6mm, 0.4mm, 0.2mm, or 0.1mm. The protrusions of the first seed curtain 480 (including any of the first seed curtain first sized member 483, first seed curtain second sized member 484, or first seed curtain third sized member 485) and/or the protrusions of the second seed curtain 490 may have a largest cross-sectional dimension of less than about 6mm, 5.8mm, 5.6mm, 5.4mm, 5.2mm, 5mm, 4.8mm, 4.6mm, 4.4mm, 4.2mm, 4mm, 3.8mm, 3.6mm, 3.4mm, 3.2mm, 3mm, 2.8mm, 2.6mm, 2.4mm, 2.2mm, 2mm, 1.8mm, 1.6mm, 1.4mm, 1.2mm, 1mm, 0.8mm, 0.6mm, 0.4mm, 0.2mm, or 0.1mm. The protrusions of the first seed curtain 480 (including any of the first seed curtain first sized member 483, first seed curtain second sized member 484, or first seed curtain third sized member 485) and/or the protrusions of the second seed curtain 490 may have a smallest cross-sectional dimension of about 6mm, 5.8mm, 5.6mm, 5.4mm, 5.2mm, 5mm, 4.8mm, 4.6mm, 4.4mm, 4.2mm, 4mm, 3.8mm, 3.6mm, 3.4mm, 3.2mm, 3mm, 2.8mm, 2.6mm, 2.4mm, 2.2mm, 2mm, 1.8mm, 1.6mm, 1.4mm, 1.2mm, 1mm, 0.8mm, 0.6mm, 0.4mm, 0.2mm, or 0.1mm. The protrusions of the first seed curtain 480 (including any of the first seed curtain first sized member 483, first seed curtain second sized member 484, or first seed curtain third sized member 485) and/or the protrusions of the second seed curtain 490 may have a smallest cross-sectional dimension of less than about 6mm, 5.8mm, 5.6mm, 5.4mm, 5.2mm, 5mm, 4.8mm, 4.6mm, 4.4mm, 4.2mm, 4mm, 3.8mm, 3.6mm, 3.4mm, 3.2mm, 3mm, 2.8mm, 2.6mm, 2.4mm, 2.2mm, 2mm, 1.8mm, 1.6mm, 1.4mm, 1.2mm, 1mm, 0.8mm, 0.6mm, 0.4mm, 0.2mm, or 0.1mm.

The protrusions of the second seed curtain 490 may have the same properties, e.g., any characteristic described herein or understood by one of ordinary skill in the art, as the protrusions of the first seed curtain 480, including, but not limited to, any and all of those disclosed herein. In some embodiments, the protrusions of the second seed curtain 490 may be the same as or similar to the first seed curtain first sized member 483 of the first seed curtain 480.

Turning, again, to FIG. 8, a t least one first seed curtain first sized member 483 is shown at or proximate the first seed curtain first end 481 or the first seed curtain 480, at least one first seed curtain third sized member 485 is shown at or proximate the first seed curtain second end 482, and at least one first seed curtain second sized member 484 is shown between the first seed curtain first sized member 483 and the first seed curtain third sized member 485. In some embodiments, the first seed curtain 480 includes three separate sizes of protrusions or projections, e.g., having three separate cross-sectional dimensions. In some embodiments, the first seed curtain 480 includes only two sizes, e.g., having two separate cross-sectional dimensions. In yet other embodiments, the first seed curtain 480 has 4, 5, 6, 7, 8, 9, or 10 sizes of protrusions or projections. In still other embodiments, the first seed curtain 480 has many different sizes of protrusions or projections. For example, the protrusions may have a constantly, consistently or continually decreasing cross-sectional dimension across the first seed curtain 480, e.g., from one end of the first seed curtain 480 to the other end of the first seed curtain 480 (e.g., from the first seed curtain first end 481 to the first seed curtain second end 482 or from the first seed curtain second end 482 to the first seed curtain first end 481). In some embodiments, the constantly, consistently or continually decreasing cross-sectional dimension is a linearly decreasing cross-sectional dimension. In some embodiments, the constantly, consistently or continually decreasing cross-sectional dimension is an exponentially decreasing cross-sectional dimension. In other embodiments, the constantly, consistently or continually decreasing cross-sectional dimension is another type of decreasing cross-sectional dimension.

One or both of the first seed curtain and the second seed curtain may be configured to facilitate or permit or allow passage therethrough or across of one or more features on a seed metering meter, e.g., a seed metering disc. For example, one or both of the first seed curtain and the second seed curtain may be configured to permit passage therethrough of an agitator on a seed metering member, or any other positive structure on the seed metering member. One or both of the first seed curtain and the second seed curtain may be configured to facilitate or permit or allow passage therethrough or across of seed or other commodity adhered to or held by a seed metering member, e.g., a seed metering disc or bowl or other member. One or both of the first seed curtain and the second seed curtain may be configured to block or discourage passage therethrough or across of seed or other commodity not adhered to or held by a seed metering member, e.g., a seed metering disc or bowl or other member. For example, the seed curtains may be configured to block passage of seed therethrough when the meter is moved from the first position to the second position. That is, the seed curtains may serve as a wall between one cavity of the inside of the seed meter and a second cavity of the inside of the seed meter (the cavity being on the seed-side of the metering member). The seed curtains may work or cooperate or function with the valves disclosed elsewhere herein to facilitate commodity return to the seed pool when the seed meter and valve are in the first position. The seed curtains may work or cooperate or function with the valves disclosed elsewhere herein to block or discourage commodity from moving out of the seed pool or the cavity containing the seed pool (e.g., the first cavity) when the meter is moved from the first position to the second position and the valve moves from the first position to the second position (e.g., closes).

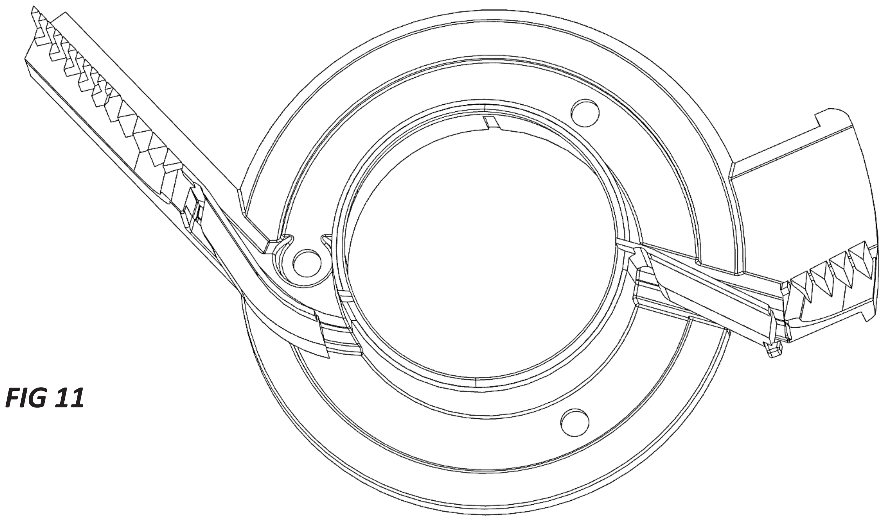

FIG. 11 illustrates a seed curtain/valve assembly 400, as shown in FIGS. 7A-7D fixed to a mounting hub configured to be fixed to an inner surface of the seed meter 344.

## Claims

1. A seed meter (344) assembly, the seed meter assembly (344) comprising:
a seed meter housing (352) at least partially defining a cavity (346);
a seed metering member (54) within the seed meter housing (352) and at least partially defining the cavity (346), the seed metering member (54) having first side (54B) and a second side (54C) and a plurality of apertures (78) extending between the first side (54B) of the seed metering member (54) and the second side (54C) of the seed metering member (54) and arranged in an annular array, wherein the seed metering member (54) is configured to adhere at least one seed to at least one aperture of the plurality of apertures (78) using a pressure differential, to rotate about a seed metering member axis (68), and to move the at least one seed adhered to the at least one aperture of the plurality of apertures (78) along a seed path (382) from a seed pick-up location (380) to a seed hand-off location (384); and
a seed curtain assembly (400) comprising:
a substantially linear seed curtain (480, 490) held between an inner surface of the seed meter housing (352) and the first side (54B) of the seed metering member (54) and at least partially intersecting the seed path (382), the seed curtain (480, 490) comprising a plurality of projections extending toward the seed metering member (54) from a seed curtain (480, 490) base coupled to the inner surface of the seed meter housing (352).

2. The seed meter assembly (344) of Claim 1, wherein the substantially linear seed curtain (480, 490) comprises a first end (481, 491) and a second end (482, 492), the first end (481, 491) radially inward of the second end (482, 492) with respect to the seed metering member axis (68).

3. The seed meter assembly (344) of Claim 1 or 2, wherein the plurality of projections comprises a first group of projections, each projection of the first group of projections having a first cross-sectional dimension, and a second group of projections, each projection of the second group of projections having a second cross-sectional dimension different from the first cross-sectional dimension.

4. The seed meter assembly (344) of Claim 3, wherein the first cross-sectional dimension is larger than the second cross-sectional dimension and the first group of projections is configured to facilitate passage therethrough of at least one agitator coupled to the first side (54B) of the seed metering member (54) and to discourage passage therethrough of seed.

5. The seed meter assembly (344) of Claim 3 or 4, wherein the second group of projections at least partially intersects the seed path (382) and is configured to allow passage therethrough of seed adhered to the at least one aperture of the plurality of apertures (78) and moving along the seed path (382), discourage passage therethrough of a seed double adhered to the at least one aperture of the plurality of apertures (78) and moving along the seed path (382), and discourage passage therethrough of seed in a direction opposite the seed path (382).

6. The seed meter assembly (344) of one of the Claims 1 to 5, wherein the at least one projection of the plurality of projections has a triangular cross-sectional shape.

7. The seed meter assembly (344) of Claim 6, wherein a flat edge of the triangular cross-sectional shape is substantially perpendicular to the seed path (382).

8. The seed meter assembly (344) of one of the Claims 1 to 7, wherein the at least one projection of the plurality of projections has a cross-sectional shape having a major axis and a minor axis.

9. The seed meter assembly (344) of Claim 8, wherein the minor axis of the cross-sectional shape is substantially perpendicular to the seed path (382).
